# EUROPÄISCHE PATENTSCHRIFT

(11) **EP 2 849 260 B1**
(45) Veröffentlichungstag und Bekanntmachung des Hinweises auf die Patenterteilung: **26.04.2023**
(21) Anmeldenummer: 14183877.1
(22) Anmeldetag: 08.09.2014
(51) Int. Cl.: H01M 50/213, H01M 50/296, H01M 50/50

(54) **Wiederaufladbare Batterie**
Rechargeable battery
Pile rechargeable

(30) Priorität: 16.09.2013 DE 102013218531
(43) Veröffentlichungstag der Anmeldung: 18.03.2015
(73) Patentinhaber: Robert Bosch GmbH, 70442 Stuttgart (DE)
(72) Erfinder: Thornton, Darren, Mistley, Essex, Co11 1UD (GB); Zahn, Wolf, 70439 Stuttgart (DE); Ling, Matthew, Ipswich Suffolk, IP6 8QR (GB); Gilbert, Austen, Capel St Mary, Ipswich, Suffolk, IP9 2ES (GB); Seidel, Thorsten, 71686 Remseck (DE)

(56) Entgegenhaltungen:
- EP-A1- 0 994 523
- EP-A1- 1 035 599
- EP-A1- 2 487 736
- EP-A2- 1 100 173
- US-A1- 2009 051 313
- US-A1- 2009 085 514

## Beschreibung

### Stand der Technik

Es ist bereits eine Akkuvorrichtung, insbesondere eine Werkzeugakkuvorrichtung, mit einer Dichtvorrichtung, die dazu vorgesehen ist, zumindest einen Elektrikbereich wenigstens staubdicht und/oder wasserdicht zu verschließen, mit einem ersten elektrischen Kontakt und zumindest einem zweiten elektrischen Kontakt, die dazu vorgesehen sind, eine elektrische Betriebsenergie und/oder Informationen zu übertragen, vorgeschlagen worden.

In der US 2009/0051313 A1 und in der US 2009/085514 AA sind Akkuladegeräte beschrieben, die Wasserablauföffnungen im Gehäuse aufweisen.

### Offenbarung der Erfindung

Die Erfindung geht aus von einer Akkuvorrichtung, insbesondere Werkzeugakkuvorrichtung, mit einer Dichtvorrichtung, die dazu vorgesehen ist, zumindest einen Elektrikbereich wenigstens staubdicht und/oder wasserdicht zu verschließen, mit einem ersten elektrischen Kontakt und zumindest einem zweiten elektrischen Kontakt, die dazu vorgesehen sind, eine elektrische Betriebsenergie und/oder Informationen zu übertragen.

Es wird vorgeschlagen, dass die Akkuvorrichtung zumindest ein Wasserfilmtrennmittel aufweist, das dazu vorgesehen ist, eine Bildung eines direkten Wasserfilms zwischen dem ersten Kontakt und dem zweiten Kontakt insbesondere bei einem Eindringen von Wasser in zumindest einem Betriebszustand zu verhindern. Unter einer "Dichtvorrichtung" soll insbesondere eine, dem Fachmann als sinnvoll erscheinende Vorrichtung verstanden werden, die dazu geeignet ist, ein Eindringen von Staub und/oder Feuchtigkeit in den Zellblock zu verhindern. Insbesondere verhindert die Dichtvorrichtung ein Eindringen von Staub und/oder Feuchtigkeit in einen insbesondere im Wesentlichen gesamten Bereich zwischen den Akkuzellen des Zellblocks. Insbesondere soll unter einer "Dichtvorrichtung" keine Vorrichtung verstanden werden, die eine einzelne Akkuzelle abdichtet oder elektrisch isoliert. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs-und/oder Betriebszustand erfüllt und/oder ausführt. Insbesondere soll unter einem "Elektrikbereich" ein Bereich verstanden werden, in dem eine Elektrik und/oder eine Elektronik zumindest teilweise angeordnet ist. Vorzugsweise ist eine Elektrik bis auf die Kontakte, insbesondere eine Elektronik, zumindest im Wesentlichen vollständig in dem Elektrikbereich angeordnet. Vorzugsweise sind lediglich die elektrischen Kontakte außerhalb des Elektrikbereichs angeordnet. Vorzugsweise umfasst die Elektrik Akkuzellen, elektrische Verbindungsmittel und eine Elektronik des Akkus. Vorzugsweise sind in dem Elektrikbereich zumindest ein Zellblock und vorteilhaft die Elektronik angeordnet. Unter einem "Zellblock" soll insbesondere eine Einheit mit mehreren Akkuzellen verstanden werden, die dazu vorgesehen sind, eine elektrische Energie insbesondere an ein Werkzeug abzugeben. Vorzugsweise umfasst der Zellblock zumindest zwei Akkuzellen, vorteilhaft zumindest acht Akkuzellen, besonders vorteilhaft zumindest 16 Ackuzellen. Vorteilhaft sind die Akkuzellen relativ zueinander ortsfest angeordnet. Besonders vorteilhaft ordnet ein Wärmeableitmittel des Zellblocks die Akkuzellen relativ zueinander an. Insbesondere weist der Zellblock ein Zellblockgehäuse auf, das dazu vorgesehen ist, das Wärmeableitmittel und vorteilhaft damit die Akkuzellen aneinander zu befestigen. Insbesondere bildet der Zellblock zumindest bei einem Montageschritt eine Baugruppe. Bevorzugt ist der Zellblock dazu vorgesehen, eine elektrische Energie mit einer Spannung größer als 12 Volt, besonders vorteilhaft größer als 20 Volt, bereitzustellen. Insbesondere ist der Zellblock dazu vorgesehen, eine elektrische Energie mit einer Spannung kleiner als 50 Volt bereitzustellen. Insbesondere weist der Zellblock, und damit der Akku, eine Speicherkapazität von weniger als 1000 Wattstunden, vorteilhaft weniger als 500 Wattstunden, besonders vorteilhaft weniger als 250 Wattstunden, auf. Insbesondere weist der Zellblock, und damit der Akku, eine Speicherkapazität von mehr als 10 Wattstunden, vorteilhaft mehr als 25 Wattstunden, besonders vorteilhaft mehr als 100 Wattstunden, auf. Unter einer "Elektronik" soll insbesondere eine Vorrichtung verstanden werden, die zumindest einen elektrischen Strom in einem Gas, in einem Leiter, in einem Vakuum und/oder vorteilhaft in einem Halbleiter beeinflusst. Vorzugsweise weist die Elektronik zumindest einen Transistor, besonders bevorzugt zumindest einen Mikroprozessor auf. Insbesondere soll unter der Wendung "vor einem Eindringen von Staub und/oder Feuchtigkeit schützen" verstanden werden, dass die Dichtvorrichtung in zumindest einem Betriebszustand ein Eindringen von Wasser und/oder Staub in den Zellblock verhindert. Vorzugsweise schützt die Dichtvorrichtung den Zellblock gemäß der Norm IEC 60529 zumindest mit der Schutzklasse IP55, vorzugsweise IP67, besonders bevorzugt IP68. Vorzugsweise sind elektrische Kontakte des Akkus, insbesondere Energiekontakte und Kommunikationskontakte des Akkus, in einem Bereich angeordnet, der außerhalb eines von der Dichtvorrichtung geschützten Bereichs liegt. Unter einem "Kontakt" soll insbesondere ein elektrisch leitfähiges Mittel verstanden werden, das dazu vorgesehen ist, eine Energie und/oder eine Information auf ein mit der Werkzeugschnittstelle des Akkus verbundenes Werkzeug zu übertragen. Vorzugsweise weist der Kontakt eine Kontakttulpe oder einen Kontaktstift auf. Insbesondere soll unter einer "elektrischen Betriebsenergie" eine elektrische Energie verstanden werden, die zur Ausführung einer vorgesehenen Hauptfunktion des Werkzeugs vorgesehen ist. Insbesondere soll unter einem "Wasserfilmtrennmittel" ein Mittel verstanden werden, das dazu vorgesehen ist, eine Funktionsstörung durch Wasser zwischen den elektrischen Kontakten zu vermeiden. Vorzugsweise unterbricht das Wasserfilmtrennmittel in zumindest einem Betriebszustand einen direkten Wasserfilm zwischen den elektrischen Kontakten. Alternativ oder zusätzlich ist das Wasserfilmtrennmittel dazu vorgesehen, eine Verbindung zwischen zwei Wasserfilmen zu verhindern, die jeweils einen der Kontakte berühren. Insbesondere trennt das Wasserfilmtrennmittel den Wasserfilm, zumindest wenn ein Bereich zwischen den Kontakten nach einer vollständigen Flutung mit Wasser entleert wird. Vorzugsweise weist die Akkuvorrichtung mehrere Wasserfilmtrennmittel, besonders bevorzugt zwei Wasserfilmtrennmittel, auf. Alternativ könnte die Akkuvorrichtung genau ein Wasserfilmtrennmittel aufweisen. Unter einem "direkten Wasserfilm" soll insbesondere eine an einer Oberfläche haftende Wasserschicht verstanden werden, die den ersten Kontakt und den zweiten Kontakt auf einem Weg verbindet, der im Wesentlichen einem kürzesten Abstand zwischen den Kontakten außerhalb des Elektrikbereichs entspricht. Unter "im Wesentlichen" soll in diesem Zusammenhang verstanden werden, dass das Wasserfilmtrennmittel einen Wasserfilm in zumindest einem Betriebszustand verhindert, dessen Weg zwischen den Kontakten kürzer ist als zweimal der kürzeste Abstand der Kontakte, vorteilhaft kürzer als eineinhalbmal der kürzeste Abstand der Kontakte. Durch die erfindungsgemäße Ausgestaltung der Akkuvorrichtung kann ein Fehlstrom zwischen den Kontakten vorteilhaft so weit reduziert werden, dass eine Fehlfunktion und Korrosion durch Elektrolyse vermieden werden.

In einer weiteren Ausgestaltung wird vorgeschlagen, dass die Akkuvorrichtung ein Gehäuseteil aufweist, das die Wasserfilmtrennmittel zumindest teilweise bildet, wodurch eine kostengünstige Fertigung erreicht werden kann. Unter einem "Gehäuseteil" soll insbesondere ein Bauteil eines Außengehäuses der Akkuvorrichtung verstanden werden. Vorzugsweise bildet ein Gehäuseteil eines Zellblockgehäuses des Zellblocks der Akkuvorrichtung das Wasserfilmtrennmittel. Alternativ oder zusätzlich könnte ein Gehäuseteil eines Akkuaußengehäuses der Akkuvorrichtung, insbesondere ein Deckelteil des Akkuaußengehäuses, das Wasserfilmtrennmittel bilden. Des Weiteren könnte das Wasserfilmtrennmittel als ein eigenständiges Bauteil ausgebildet sein. Insbesondere soll unter dem Begriff "bilden" in diesem Zusammenhang verstanden werden, dass das Gehäuseteil eine Form aufweist, die in zumindest einem Betriebszustand einen direkten Wasserfilm zwischen dem ersten Kontakt und dem zweiten Kontakt in zumindest einem Betriebszustand verhindert.

Des Weiteren wird vorgeschlagen, dass das Wasserfilmtrennmittel zumindest teilweise von einem hydrophoben Material gebildet ist, wodurch der Wasserfilm besonders effektiv getrennt werden kann. Unter einem "hydrophoben Material" soll insbesondere ein Material verstanden werden, das einen Kontaktwinkel mit Wasser größer als 60 Grad vorteilhaft größer als 90 Grad, aufweist. Vorzugsweise bildet das hydrophobe Material zumindest eine Oberfläche des Wasserfilmtrennmittels. Besonders vorteilhaft ist das das Wasserfilmtrennmittel bildende Mittel vollständig aus einem hydrophoben Material gebildet. Alternativ oder zusätzlich könnte das das Wasserfilmtrennmittel bildende Mittel zumindest teilweise mit einem hydrophoben Material, beispielsweise Teflon, beschichtet sein.

Ferner wird vorgeschlagen, dass das Wasserfilmtrennmittel zwischen dem ersten Kontakt, der bei einem Betrieb die elektrische Betriebsenergie überträgt, und dem zweiten Kontakt, der in zumindest einem Betriebszustand Informationen insbesondere an ein Werkzeug und/oder ein Akkuladegerät überträgt, angeordnet ist, wodurch ein Einfluss einer Betriebsspannung der Betriebsenergie auf ein Signal, das die Informationen an das Werkzeug überträgt, vorteilhaft reduziert werden kann. Insbesondere soll unter dem Begriff "zwischen" in diesem Zusammenhang verstanden werden, dass zumindest ein Wirkungsbereich des Wasserfilmtrennmittels und vorteilhaft das Wasserfilmtrennmittel selbst auf zumindest einer Geraden liegt, die von dem Wasserfilmtrennmittel ausgehend auf einer ersten Seite den ersten Kontakt und auf einer zweiten, anderen Seite den zweiten Kontakt schneidet.

### Austauschseite 5 (Reinschrift)

Zudem wird vorgeschlagen, dass die Akkuvorrichtung zumindest einen dritten Kontakt aufweist, der bei einem Betrieb die elektrische Betriebsenergie überträgt, wodurch eine konstruktiv einfache Informationsübertragung erreicht werden kann.

Weiterhin wird vorgeschlagen, dass der zweite Kontakt zwischen dem ersten Kontakt und dem dritten Kontakt angeordnet ist, wodurch zwischen dem ersten Kontakt und dem dritten Kontakt konstruktiv einfach ein großer Abstand möglich ist, was zu einem geringen Fehlstrom zwischen den Kontakten durch den Wasserfilm führt. Vorzugsweise weist die Akkuvorrichtung zwei Wasserfilmtrennmittel auf, von denen immer eines zwischen zwei der Kontakte angeordnet ist.

Zudem begrenzt das Wasserfilmtrennmittel zumindest einen Wasserablaufschlitz, wodurch ein im Gegensatz zu einer Konstruktion mit Trennwänden geringer Platzbedarf erreicht werden kann. Unter einem "Wasserablaufschlitz" soll insbesondere ein Schlitz verstanden werden, der dazu vorgesehen ist, Wasser aus Bereichen zwischen den Kontakten in Richtung einer Schwerkraft abzuführen. Insbesondere führen die Wasserablaufschlitze das Wasser in ein Gehäuse der Akkuvorrichtung hinein. Vorzugsweise weist die Akkuvorrichtung mehrere Wasserfilmtrennmittel auf, die mehrere Wasserablaufschlitze begrenzen. Vorzugsweise weist der Wasserablaufschlitz entlang einer Ablaufrichtung eine gleichbleibende Breite auf. Alternativ könnte der Wasserablaufschlitz entlang der Ablaufrichtung unterschiedliche Breiten aufweisen. Des Weiteren könnte das Wasserfilmtrennmittel eine Blende aufweisen, die auf einer den Kontakten abgewandten Seite des Gehäuseteils angeordnet ist und zumindest teilweise in der Ablaufrichtung des Wasserablaufschlitzes angeordnet ist. Durch die Blende kann bei einem Betrachter ein vorteilhaft geschlossener Eindruck erreicht werden und ein Eindringen von größeren Objekten in einem von dem Gehäuseteil begrenzten Bereich verhindert werden

Des Weiteren wird vorgeschlagen, dass das Wasserfilmtrennmittel eine Trennwand bildet, wodurch eine Fehlfunktion durch einen Fehlstrom auch bei viel Wasser zwischen den Kontakten, insbesondere bei auch bei einem vollständig gefluteten Bereich, erreicht werden kann. Insbesondere soll unter einer "Trennwand" ein Mittel verstanden werden, das einen Raum, in dem der erste Kontakt angeordnet ist, und einen Raum, in dem der zweite Kontakt angeordnet ist, voneinander trennt. Vorzugsweise weist die Akkuvorrichtung mehrere Wasserfilmtrennmittel auf, die mehrere Trennwände bilden.

Ferner wird ein Akku, insbesondere Werkzeugakku, mit einer erfindungsgemäßen Ackuvorrichtung vorgeschlagen. Insbesondere soll unter einem "Werkzeugakku" ein Akku verstanden werden, der dazu vorgesehen ist, ein Werkzeug mit elektrischer Energie zu versorgen. Insbesondere soll unter einem "Werkzeug" ein, dem Fachmann als sinnvoll erscheinendes Werkzeug, vorteilhaft jedoch eine Bohrmaschine, ein Bohrhammer, ein Schlaghammer, eine Säge, ein Hobel, ein Schrauber, eine Fräse, ein Schleifer, ein Winkelschleifer, ein Baustellenmessgerät, ein Multifunktionswerkzeug und/oder vorteilhaft ein Gartengerät, insbesondere ein Rasenmäher, verstanden werden. Alternativ oder zusätzlich könnte der Akku dazu vorgesehen sein, ein zumindest teilweise elektrisch angetriebenes Fahrrad mit elektrischer Energie zu versorgen. Insbesondere ist der Akku von einem Bediener zur Versorgung eines Geräts zerstörungsfrei und insbesondere werkzeuglos mit dem Gerät verbindbar und von dem Gerät trennbar.

Zudem wird ein Akkuladegerät, insbesondere ein Werkzeugakkuladegerät, mit einer erfindungsgemäßen Akkuvorrichtung vorgeschlagen. Unter einem "Akkuladegerät" soll insbesondere ein Gerät verstanden werden, das dazu vorgesehen ist, eine Versorgungsspannung, insbesondere eine Bordspannung und/oder eine Netzspannung, in eine Ladespannung zu wandeln. Vorzugsweise ist das Akkuladegerät dazu vorgesehen, einen Ladevorgang zu steuern und/oder vorteilhaft zu regeln.

Die erfindungsgemäße Akkuvorrichtung soll hierbei nicht auf die oben beschriebene Anwendung und Ausführungsform beschränkt sein. Insbesondere kann die erfindungsgemäße Akkuvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung sind zwei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Akku mit einer erfindungsgemäßen Akkuvorrichtung in einer perspektivischen Darstellung,
- Fig. 2: einen Schnitt durch eine Werkzeugschnittstelle des Akkus aus Figur 1,
- Fig. 3: einen Zellblock, Kontakte und eine Dichtvorrichtung des Akkus aus Figur 1 in einer perspektivischen Darstellung,
- Fig. 4: eine Schnittdarstellung des Akkus aus Figur 1,
- Fig. 5: ein Akkuladegerät mit einer erfindungsgemäßen Akkuvorrichtung in einer perspektivischen Darstellung,
- Fig. 6: eine Schnittdarstellung des Akkuladegeräts aus Figur 4 und
- Fig. 7: ein die Wasserfilmtrennmittel aufweisendes Gehäuseteil des Akkuladegeräts aus Figur 4 in einer perspektivischen Darstellung.

### Beschreibung der Ausführungsbeispiele

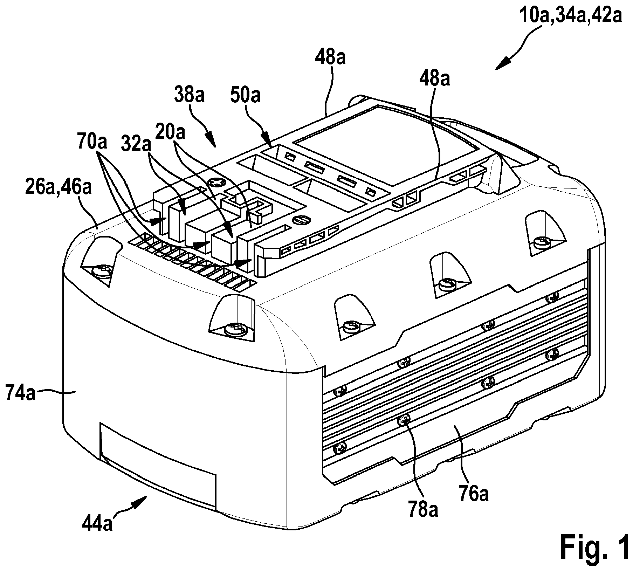

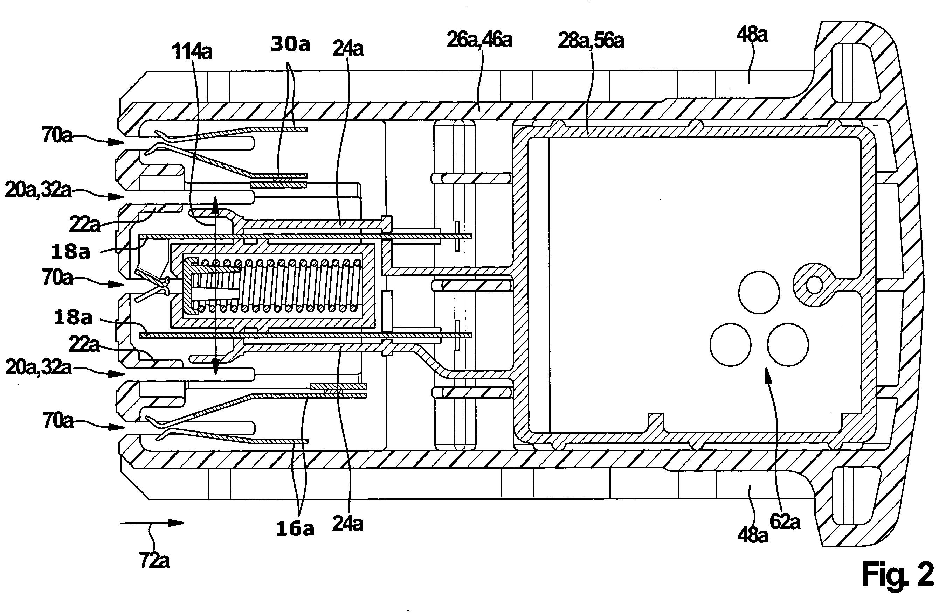

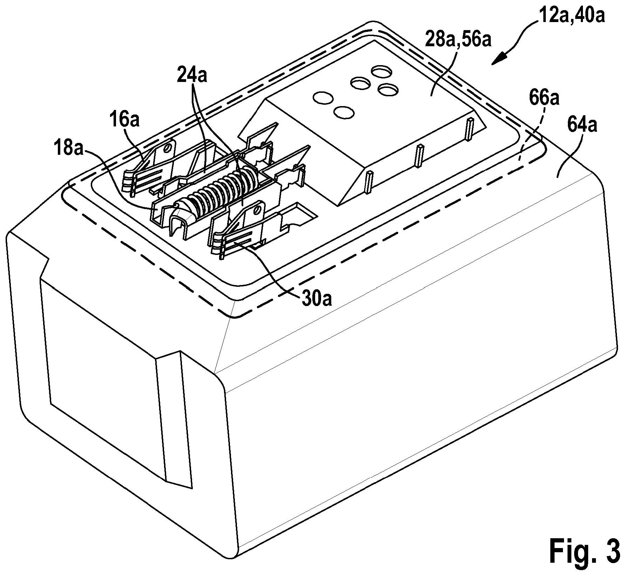

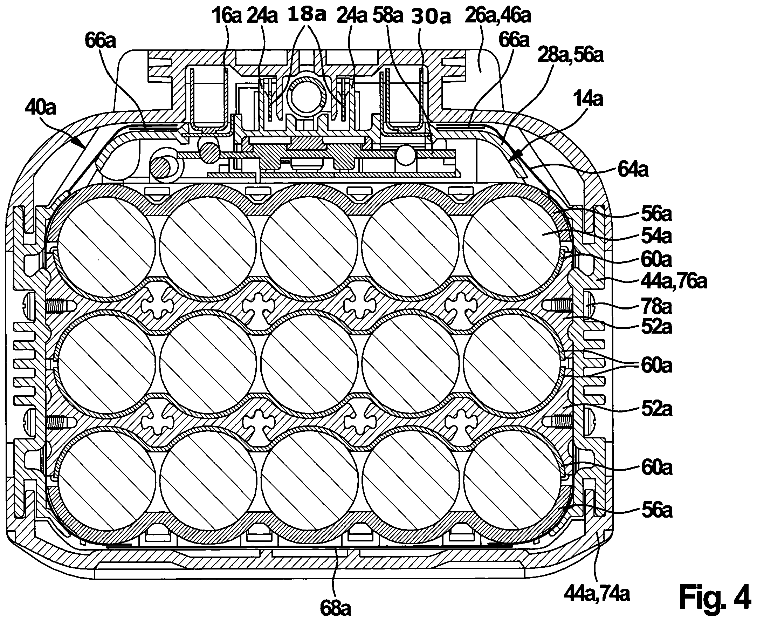

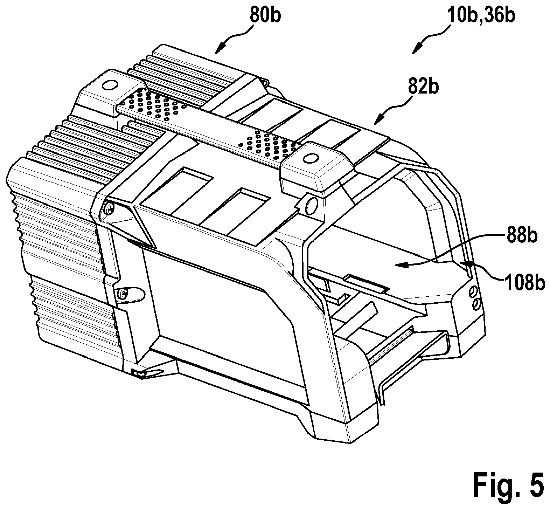

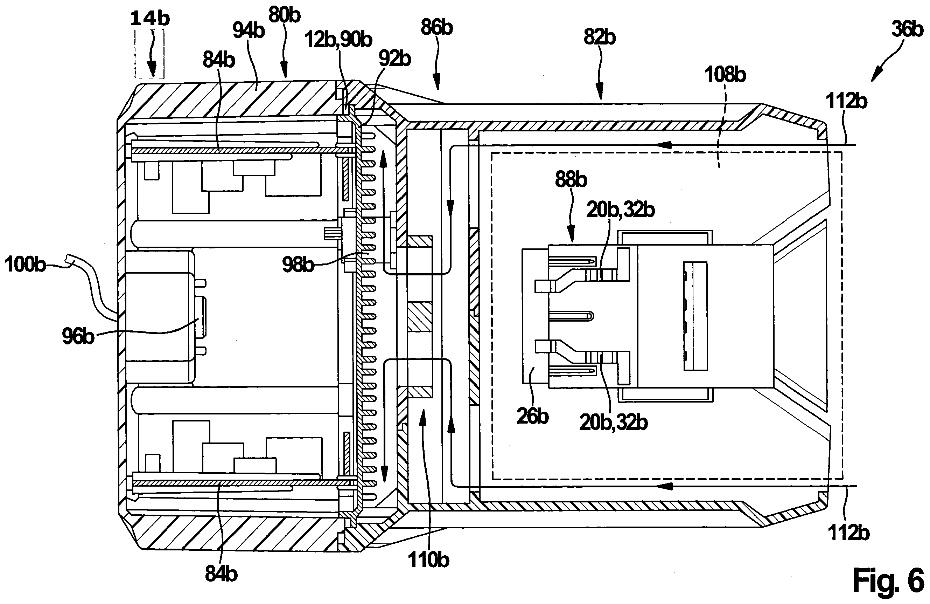

Figuren 1 bis 4 zeigen einen Akku 34a eines Systems mit dem Akku 34a und einem in den Figuren 5 bis 7 dargestellten Akkuladegerät 36b. Der Akku 34a ist als ein Werkzeugakku ausgebildet. Der Akku 34a weist eine erfindungsgemäße Akkuvorrichtung 10a auf. Die Akkuvorrichtung 10a ist dazu vorgesehen, bei einem Einsatz in einer feuchten Umgebung einen Elektrikbereich 14a des Akkus 34a und eine Werkzeugschnittstelle 38a des Akkus 34a vor eine Beschädigung und einer Fehlfunktion durch Staub, Schmutz und Wasser zu schützen.

Des Weiteren weist der Akku 34a einen Zellblock 40a und ein Akkuaußengehäuse 42a auf. Das Akkuaußengehäuse 42a umschließt den Zellblock 40a. Das Akkuaußengehäuse 42a weist einen Grundkörper 44a und ein Deckelgehäuseteil 46a auf. Die Werkzeugschnittstelle 38a ist an dem Deckelgehäuseteil 46a angeordnet. Das Deckelgehäuseteil 46a bildet eine Oberseite des Akkus 34a. Das Deckelgehäuseteil 46a ist als ein Kunststoffteil ausgebildet.

Die Werkzeugschnittstelle 38a ist dazu vorgesehen, eine mechanische und eine elektrische Verbindung mit einem Werkzeug, mit einem Fahrrad oder mit dem Akkuladegerät 36b herzustellen. Zur mechanischen Verbindung weist die Werkzeugschnittstelle 38a Führungsschienen 48a und zumindest ein Rastmittel 50a auf. Die Führungsschienen 48a und das Rastmittel 50a werden von dem Akkuaußengehäuse 42a gebildet. Die Werkzeugschnittstelle 38a weist einen ersten Kontakt 16a, einen zweiten Kontakt 18a und einen dritten Kontakt 30a auf. Zwischen dem ersten Kontakt 16a und dem dritten Kontakt 30a liegt eine Betriebsspannung des Zellblocks 40a an. Der zweite Kontakt 18a überträgt in zumindest einem Betriebszustand Informationen zwischen dem Zellblock 40a und dem Werkzeug, dem Fahrrad oder dem Akkuladegerät 36b. Der zweite Kontakt 18a ist zwischen dem ersten Kontakt 16a und dem dritten Kontakt 30a angeordnet.

Der Zellblock 40a weist Wärmeableitmittel 52a, mehrere Akkuzellen 54a, ein Zellblockgehäuse 56a, eine Elektronik 58a und Befestigungsmittel 60a auf. Die Elektronik 58a ist dazu vorgesehen, Akkuspannungen und Temperaturen der Akkuzellen 54a zu überwachen und eine Beschädigung der Akkuzellen 54a zu vermeiden. Das Zellblockgehäuse 56a ist dazu vorgesehen, die Wärmeableitmittel 52a, die Akkuzellen 54a, die Elektronik 58a und die Befestigungsmittel 60a zu einer Baugruppe zu verbinden, die den Zellblock 40a bildet.

Das Zellblockgehäuse 56a begrenzt den Elektrikbereich 14a, in dem die Elektronik 58a und die Akkuzellen 54a angeordnet sind. Die Kontakte 16a, 18a, 30a der Werkzeugschnittstelle 38a sind teilweise in das Zellblockgehäuse 56a eingegossen. Das Zellblockgehäuse 56a weist Klimatisierungsöffnungen 62a auf, die mit einer hier nicht näher dargestellten wasserdichten, atmungsaktiven Membran verschlossen sind.

Eine Dichtvorrichtung 12a der Akkuvorrichtung 10a ist dazu vorgesehen, den von dem Zellblockgehäuse 56a aufgespannten Elektrikbereich 14a des Zellblocks 40a abzudichten. Die Dichtvorrichtung 12a weist eine Dichtfolie 64a, ein erstes Dichtmittel 66a und ein zweites Dichtmittel 68a auf. Die Dichtfolie 64a ist schlauchförmig ausgebildet. Alternativ könnte eine Dichtfolie sackförmig ausgebildet sein. Die Dichtfolie 64a ist selbstschrumpfend ausgebildet. Die Dichtfolie 64a liegt an einer Vorderseite, an einer Hinterseite und an beiden Lateralseiten an dem Zellblock 40a an. Die Dichtfolie 64a deckt diese Seiten zumindest im Wesentlichen vollständig ab.

Das erste Dichtmittel 66a ist als eine Dichtmasse ausgebildet. Hier ist das erste Dichtmittel 66a als ein Butyldichtstoff ausgebildet. Das erste Dichtmittel 66a ist dazu vorgesehen, einen Spalt zwischen dem Zellblockgehäuse 56a und der Dichtfolie 64a abzudichten. Somit verhindert das erste Dichtmittel 66a ein Eindringen von Staub und/oder Feuchtigkeit in den Zellblock 40a.

Das zweite Dichtmittel 68a dichtet eine der Werkzeugschnittstelle 38a abgewandte Unterseite des Zellblocks 40a ab. Das zweite Dichtmittel 68a ist als eine selbstklebende Folie ausgebildet. Das zweite Dichtmittel 68a verschließt eine der Werkzeugschnittstelle 38a abgewandte Öffnung der schlauchförmigen Dichtfolie 64a. Somit umschließt die Dichtvorrichtung 12 den Zellblock 40 auf fünf Seiten. Die sechste Seite wird von dem Zellblockgehäuse 56a abgedichtet.

Die Akkuvorrichtung 10a weist mehrere Wasserfilmtrennmittel 20a, 22a, 24a auf. Die Wasserfilmtrennmittel 20a, 22a, 24a sind dazu vorgesehen, eine Bildung eines direkten Wasserfilms zwischen dem ersten Kontakt 16a, dem zweiten Kontakt 18a und/oder dem dritten Kontakt 30a in zumindest einem Betriebszustand zu verhindern. Die Wasserfilmtrennmittel 20a, 22a, 24a sind jeweils wirkungsmäßig zwischen dem ersten Kontakt 16a und dem zweiten Kontakt 18a oder zwischen dem zweiten Kontakt 18a und dem dritten Kontakt 30a angeordnet. Der erste Kontakt 16a und der dritte Kontakt 30a sind als Kontakttulpen ausgebildet. Der zweite Kontakt 16a weist zwei getrennt ausgebildete Kontaktfedern aus, die nach außen auslenkbar sind.

Zwei der Wasserfilmtrennmittel 20a sind von einem Gehäuseteil 26a gebildet, das als das Deckelgehäuseteil 46a des Akkuaußengehäuses 42a ausgebildet ist. Diese zwei Wasserfilmtrennmittel 20a sind als von dem Gehäuseteil 26a begrenzte Wasserablaufschlitze 32a ausgebildet. Durch die Wasserablaufschlitze 32a kann Wasser aus einem Bereich der Kontakte 16a, 18a, 30a austreten, wenn der Akku 34a mit dem Deckelgehäuseteil 46a nach unten in dem Akkuladegerät 36b angeordnet ist. Die Wasserablaufschlitze 32a sind räumlich zwischen Kontaktschlitzen 70a angeordnet, durch die Kontakte 16b, 18b, 30b des Akkuladegeräts 36b die Kontakte 16a, 18a, 30a des Akkus 34a kontaktieren. Die Wasserablaufschlitze 32a sind parallel zu den Kontaktschlitzen 70a ausgerichtet. Die Wasserablaufschlitze 32a weisen eine Haupterstreckung auf, die parallel zu einer Koppelrichtung 72a der Werkzeugschnittstelle 38a ausgerichtet ist.

Die Wasserablaufschlitze 32a weisen eine Breite insbesondere senkrecht zu der Haupterstreckung auf, die größer ist als eine Tröpfchengröße des insbesondere ablaufenden Wasserfilms, die durch eine Oberflächenspannung des Wassers und ein Material des Wasserfilmtrennmittels 20a gegeben ist.

Zwei weitere der Wasserfilmtrennmittel 22a sind ebenfalls von dem Gehäuseteil 26a gebildet, das als das Deckelgehäuseteil 46a des Akkuaußengehäuse 42a ausgebildet ist. Die zwei Wasserfilmtrennmittel 22a sind als von dem Gehäuseteil 26a gebildete Trennwände ausgebildet. Eines dieser Wasserfilmtrennmittel 22a ist zwischen dem ersten Kontakt 16a und dem zweiten Kontakt 18a und ein weiteres dieser Wasserfilmtrennmittel 22a ist zwischen dem zweiten Kontakt 18a und dem dritten Kontakt 30a angeordnet. Die Wasserfilmtrennmittel 22a weisen eine Haupterstreckung auf, die parallel zu der Koppelrichtung 72a der Werkzeugschnittstelle 38a ausgerichtet ist. Die Wasserfilmtrennmittel 22a erstrecken sich auf einer Ebene, die senkrecht zu einer Geraden ausgerichtet ist, die die Kontakte 16a, 18a, 30a auf einem kürzesten Weg verbindet.

Zwei der Wasserfilmtrennmittel 24a sind von einem Gehäuseteil 28a des Zellblockgehäuses 56a gebildet. Die Wasserfilmtrennmittel 24a selbst sind als Trennwände ausgebildet. Die Wasserfilmtrennmittel 24a weisen eine Haupterstreckung parallel zu einer Haupterstreckung der Kontakte 16a, 18a, 30a auf, die mehr als 50 % der Haupterstreckung eines der Kontakte 16a, 18a, 30a entspricht. Die Wasserfilmtrennmittel 24a sind dazu vorgesehen, zumindest einen der Kontakte 16a, 18a, 30a zu befestigen, und zwar hier den zweiten Kontakt 18a. Die Wasserfilmtrennmittel 24a sind in einem Bereich von dem zweiten Kontakt 18a beabstandet angeordnet, damit der zweite Kontakt 18b ausfedern kann. Das Deckelgehäuseteil 46a und das Zellblockgehäuse 56a und somit die Wasserfilmtrennmittel 20a, 22a, 24a sind aus einem hydrophoben Material hergestellt.

Der Grundkörper 44a des Akkuaußengehäuses 42a weist ein Bodenelement 74a und zwei Wärmeabstrahlmittel 76a auf. Das Bodenelement 74a begrenzt den Akku 34a auf einer Unterseite, auf einer Vorderseite und auf einer Hinterseite, jeweils bezogen auf eine Koppelrichtung 72a der Werkzeugschnittstelle 38a. Zudem bildet das Bodenelement 74a vier an die Unterseite angrenzende Ecken. Das Bodenelement 74a ist als ein Kunststoffteil ausgebildet.

Die zwei Wärmeabstrahlmittel 76a begrenzen den Akku 34a jeweils auf einer Lateralseite. Die Wärmeabstrahlmittel 76a sind als Aluminiumkörper ausgebildet. Die Wärmeabstrahlmittel 76a weisen an einer Außenseite Kühlrippen auf. Die Wärmeabstrahlmittel 76a, der Grundkörper 44a und das Deckelgehäuseteil 46a sind miteinander verschraubt. Zusammen umschließen die Wärmeabstrahlmittel 76a, der Grundkörper 44a und das Deckelgehäuseteil 46a den Zellblock 40a vollständig. Alternativ oder zusätzlich könnte ein Akku ein oder mehrere Wärmeabstrahlmittel, beispielsweise an der Vorderseite, an der Rückseite und/oder an der Unterseite, aufweisen.

Die Wärmeableitmittel 52a sind dazu vorgesehen, Wärme bei einem Ladevorgang und einem Entladevorgang aus dem Zellblock 40a abzuleiten. Die Wärmeableitmittel 52a erstrecken sich entlang einer Geraden durch den gesamten Zellblock 40a. Auf zwei einander abgewandten Seiten der Wärmeableitmittel 52a sind die Akkuzellen 54a angeordnet. Die Wärmeableitmittel 52a begrenzen teilzylinderförmige Aussparungen, die dazu vorgesehen sind, die Akkuzellen 54a zumindest teilweise aufzunehmen. Zwischen den Wärmeableitmitteln 52a und den Akkuzellen 54a ist jeweils eines der Befestigungsmittel 60a angeordnet. Die Befestigungsmittel 60a verhindern einen direkten Kontakt zwischen den Wärmeableitmitteln 52a und den Akkuzellen 54a. Die Befestigungsmittel 60a sind als elektrisch isolierende und insbesondere teilelastische Schichtelemente ausgebildet. Die Befestigungsmittel 60a bestehen aus einem, dem Fachmann als sinnvoll erscheinenden Material mit einer guten Wärmeleitfähigkeit.

Die Wärmeableitmittel 52a und die Wärmeabstrahlmittel 76a sind als voneinander getrennt ausgebildete Bauteile gebildet. Die Wärmeableitmittel 52a und die Wärmeabstrahlmittel 76a sind durch Schrauben 78a miteinander verbunden. Die Schrauben 78a drücken eines der Wärmeableitmittel 52a und eines der Wärmeabstrahlmittel 76a von zwei verschiedenen Seiten gegen die Dichtfolie 64a. Somit bewirken die Schrauben 78a eine Presskraft auf die Dichtfolie 64a. Dadurch liegen die Wärmeableitmittel 52a und die Wärmeabstrahlmittel 76a flächig an der Dichtfolie 64a an.

Bei einem Laden und einem Entladen in den Akkuzellen 54a entstehende Wärme leiten die Befestigungsmittel 60a zu den Wärmeableitmitteln 52a. Die Wärmeableitmittel 52a leiten diese Wärme aus dem Zellblock 40a heraus zu der Dichtfolie 64a. Die Dichtfolie 64a leitet einen wesentlichen Anteil der Wärme zu den Wärmeabstrahlmitteln 76a. Einen weiteren Anteil der Wärme leiten die Schrauben 78a zu den Wärmeabstrahlmitteln 76a. Die Wärmeabstrahlmittel 76a geben die Wärme durch Abstrahlen und Konvektion an eine Umgebung des Akkus 34a ab.

In den Figuren 5 bis 7 ist ein weiteres Ausführungsbeispiel der Erfindung gezeigt. Die nachfolgenden Beschreibungen und die Zeichnung beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnung und/oder die Beschreibung der anderen Ausführungsbeispiele, insbesondere der Figuren 1 bis 4, verwiesen werden kann. Zur Unterscheidung der Ausführungsbeispiele ist der Buchstabe a den Bezugszeichen des Ausführungsbeispiels in den Figuren 1 bis 4 nachgestellt. In dem Ausführungsbeispiel der Figuren 5 bis 7 ist der Buchstabe a durch den Buchstaben b ersetzt.

Die Figuren 5 bis 7 zeigen das Akkuladegerät 36b eines Systems mit dem in den Figuren 1 bis 4 dargestellten Akku 34a und dem Akkuladegerät 36b. Das Akkuladegerät 36b ist als ein Werkzeugakkuladegerät ausgebildet. Das Akkuladegerät 36b weist eine Akkuvorrichtung 10b, ein Elektronikgehäuse 80b, ein Akkuaufnahmegehäuse 82b, eine Elektronik 84b und eine Kühlvorrichtung 86b auf. Die Akkuvorrichtung 10b ist als eine Werkzeugakkuvorrichtung ausgebildet. Die Akkuvorrichtung 10b umfasst eine Dichtvorrichtung 12b, eine Akkuschnittstelle 88b, mehrere Wasserfilmtrennmittel 20b und ein Gehäuseteil 26b.

Das Elektronikgehäuse 80b ist als ein Metallgehäuse ausgebildet. Das Elektronikgehäuse 80b weist zumindest an einer Außenseite Kühlrippen auf. Die Dichtvorrichtung 12b ist dazu vorgesehen, einen von dem Elektronikgehäuse 80b aufgespannten Elektrikbereich 14b, in dem die Elektronik 84b angeordnet ist, wenigstens staubdicht und/oder wasserdicht zu verschließen. Die Dichtvorrichtung 12b umfasst ein Dichtmittel 90b, das einen Spalt zwischen einem Deckelelement 92b des Elektronikgehäuses 80b und einem Grundkörper 94b des Elektronikgehäuses 80b abdichtet.

Des Weiteren umfasst die Dichtvorrichtung 12b zwei Kabeldichtungen 96b, 98b. Eine erste der Kabeldichtungen 96b ist dazu vorgesehen, ein Versorgungskabel 100b des Akkuladegeräts 36b, an dem eine Netz- und/oder eine Bordspannung anliegt, in einer Aussparung des Elektronikgehäuses 80b abzudichten. Eine zweite der Kabeldichtungen 98b ist dazu vorgesehen, ein nicht näher dargestelltes Kabel des Akkuladegerät 36b abzudichten, das die Kühlvorrichtung 86b und Akkuschnittstelle 88b kontaktiert.

Die Akkuschnittstelle 88b ist dazu vorgesehen, den in den Figuren 1 bis 4 dargestellten Akku 34a mechanisch und elektrisch zu kontaktieren. Die Akkuschnittstelle 88b weist den ersten Kontakt 16b, den zweiten Kontakt 18b und den dritten Kontakt 30b auf. Der erste Kontakt 16b und der dritte Kontakt 30b sind dazu vorgesehen, gemeinsam eine Ladeenergie an den Akku 34a zu übertragen. Der zweite Kontakt 18b ist, insbesondere gemeinsam mit dem ersten Kontakt 16b und/oder dem dritten Kontakt 30b, dazu vorgesehen, Informationen zwischen dem Akku 34a und der Elektronik 84b zu übertragen.

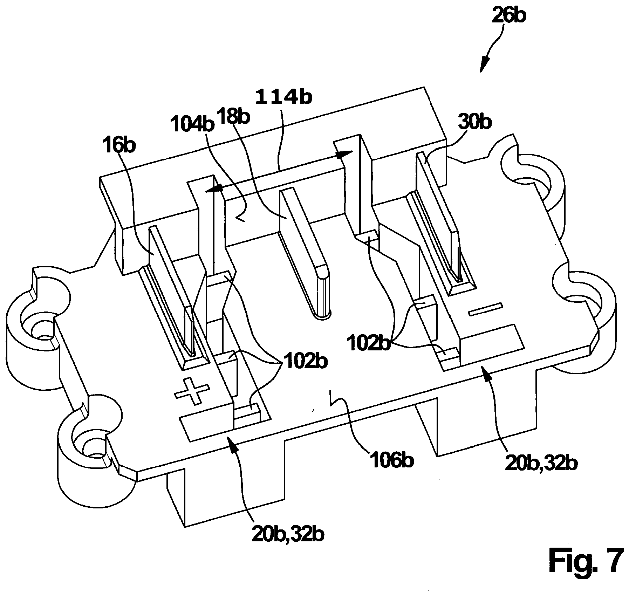

Die Kontakte 16b, 18b, 30b werden von dem in Figur 7 näher dargestellten Gehäuseteil 26b der Akkuvorrichtung 10b befestigt. Das Gehäuseteil 26b ist mit dem Akkuaufnahmegehäuse 82b verbunden. Alternativ könnten das Gehäuseteil 26b und das Akkuaufnahmegehäuse 82b einstückig ausgebildet sein. Das Gehäuseteil 26b bildet die zwei Wasserfilmtrennmittel 20b. Die Wasserfilmtrennmittel 20b begrenzen jeweils einen Wasserablaufschlitz 32b. Durch die Wasserablaufschlitze 32b kann Wasser aus einem Bereich zwischen den Kontakten 16b, 18b, 30b in das Akkuaufnahmegehäuse 82b ablaufen.

Die Wasserfilmtrennmittel 20b weisen eine Haupterstreckung parallel zu einer Haupterstreckung der Kontakte 16b, 18b, 30b auf, die größer ist als die Haupterstreckung der Kontakte 16b, 18b, 30b. Die Wasserfilmtrennmittel 20b erstrecken sich in zwei Richtungen parallel zu der Haupterstreckung der Kontakte 16b, 18b, 30b über die Kontakte 16b, 18b, 30b heraus. Das Gehäuseteil 26b weist Stege 102b auf, die in einem von den Kontakten 16b, 18b, 30b beabstandeten Bereich die Wasserablaufschlitze 32b überbrücken und somit mechanisch stabilisieren.

Die Wasserablaufschlitze 32b erstrecken sich in einen Bereich, den eine Haupterstreckungsebene eines der Kontakte 16b, 18b, 30b schneidet. Die Kontakte 16b, 18b, 30b sind an zwei Flächen 104b, 106b angeordnet, die senkrecht zueinander ausgerichtet sind. Die Wasserablaufschlitze 32b grenzen an beide Flächen 104b, 106b an. Die Wasserablaufschlitze 32b unterbrechen zumindest eine der beiden Flächen 104b, 106b, vorzugsweise jedoch beide Flächen 104b, 106b, zwischen den Kontakten 16b, 18b, 30b. Alternativ oder zusätzlich könnte an jeder der beiden Flächen 104b, 106b jeweils ein Wasserfilmtrennmittel, insbesondere ein Wasserablaufschlitz, angeordnet sein.

Eines der Wasserfilmtrennmittel 20b ist wirkungsmäßig und insbesondere räumlich zwischen dem ersten Kontakt 16b und dem zweiten Kontakt 18b angeordnet. Eines der Wasserfilmtrennmittel 20b ist wirkungsmäßig und insbesondere räumlich zwischen dem zweiten Kontakt 18b und dem dritten Kontakt 30b angeordnet. Die Wasserfilmtrennmittel 20b verhindern in zumindest einem Betriebszustand eine Bildung eines direkten Wasserfilms zwischen dem ersten Kontakt 16b und dem zweiten Kontakt 18b und/oder dem zweiten Kontakt 18b und dem dritten Kontakt 30b. Das Akkuaufnahmegehäuse 82b weist an einer Unterseite nicht näher dargestellte Öffnungen auf, durch die das durch die Wasserablaufschlitze 32b abgelaufene Wasser und/oder Schmutz aus dem Akkuaufnahmegehäuse 82b austreten kann.

Bauteile der Elektronik 84, an denen bei einem Betrieb eine hohe Abwärme entsteht, sind thermisch mit dem Deckelelement 92b des Elektronikgehäuses 80b verbunden. Das Deckelelement 92b und der Grundkörper 94b des Elektronikgehäuses 80b sind thermisch durch das Dichtmittel 90b teilweise entkoppelt. Dadurch weist das Deckelelement 92b bei einem Betrieb eine höhere Temperatur auf als der Grundkörper 94b. Der Grundkörper 94b weist Außenseiten auf, die von einem Bediener berührbar sind. Das Deckelelement 92b ist von dem Akkuaufnahmegehäuse 82b abgedeckt.

Das Akkuaufnahmegehäuse 82b ist als ein Kunststoffgehäuse ausgebildet. Das Akkuaufnahmegehäuse 82b umschließt einen Akkuaufnahmebereich 108b, in dem der Akku 34a bei einem Ladevorgang angeordnet ist, auf zumindest einer Ebene vollständig. Insbesondere umschließt das Akkuaufnahmegehäuse 82b den Akkuaufnahmebereich 108b tunnelförmig. Die Kühlvorrichtung 86b weist einen Ventilator 110b auf, der bei einem Ladevorgang einen Luftstrom 112b durch das Akkuaufnahmegehäuse 82b bewegt und dadurch den Akku 34a kühlt. Der Ventilator 110b bewegt den Luftstrom 112b an dem Deckelelement 92b zur Kühlung des Deckelelements 92b vorbei. Das Deckelelement 92b weist zumindest in einem Bereich Kühlrippen auf, an denen der Luftstrom 112b vorbeistreicht.

Ein Abstand 114a der zwei Wasserfilmtrennmittel 20a des Akkus 34a und ein Abstand 114b der zwei Wasserfilmtrennmittel 20b des Akkuladegeräts 36b, die jeweils die Wasserablaufschlitze 32a; 32b begrenzen, jeweils senkrecht zu der Koppelrichtung 72a, sind in zumindest einem Bereich der Wasserablaufschlitze 32a; 32b gleich. Somit kann Wasser, das sich in dem Akkuaußengehäuse 42a befindet, durch die Wasserablaufschlitze 32a des Akkus 34a und die Wasserablaufschlitze 32b des Akkuladegeräts 36b abfließen.

## Patentansprüche

1. Akkuladegerät aufweisend ein Akkuaufnahmegehäuse (82b) und eine Akkuvorrichtung (10b) mit einer Dichtvorrichtung (12b), die dazu vorgesehen ist, zumindest einen Elektrikbereich (14b) wenigstens staubdicht und/oder wasserdicht zu verschließen, mit einem ersten elektrischen Kontakt (16b) und zumindest einem zweiten elektrischen Kontakt (18b), die dazu vorgesehen sind, eine elektrische Betriebsenergie und/oder Informationen zu übertragen, und mit zumindest einem Wasserfilmtrennmittel (20b), das dazu vorgesehen ist, eine Bildung eines direkten Wasserfilms zwischen dem ersten Kontakt (16b) und dem zumindest einen zweiten Kontakt (18b) in zumindest einem Betriebszustand zu verhindern, **dadurch gekennzeichnet, dass** die Wasserfilmtrennmittel (20b) jeweils einen Wasserablaufschlitz (32b) derart begrenzen, dass Wasser aus einem Bereich zwischen den Kontakten (16b, 18b) in das Akkuaufnahmegehäuse (82b) ablaufen kann.

2. Akkuladegerät nach Anspruch 1, **gekennzeichnet durch** ein Gehäuseteil (26b), das das Wasserfilmtrennmittel (20b) zumindest teilweise bildet.

3. Akkuladegerät nach einem der vorhergehenden Ansprüche, **dadurch gekennzeichnet, dass** das Gehäusteil (26b) mit dem Akkuaufnahmegehäuse (82b) verbunden, insbesondere einstückig ausgebildet, ist.

4. Akkuladegerät nach einem der vorhergehenden Ansprüche, **dadurch gekennzeichnet, dass** das Wasserfilmtrennmittel (20b) zumindest teilweise von einem hydrophoben Material gebildet ist.

5. Akkuladegerät nach einem der vorhergehenden Ansprüche, **dadurch gekennzeichnet, dass** das Wasserfilmtrennmittel (20b) zwischen dem ersten Kontakt (16b), der bei einem Betrieb die elektrische Betriebsenergie überträgt, und dem zweiten Kontakt (18b) der in zumindest einem Betriebszustand Informationen überträgt, angeordnet ist.

6. Akkuladegerät nach Anspruch 5, **gekennzeichnet durch** zumindest einen dritten Kontakt (30b), der bei einem Betrieb die elektrische Betriebsenergie überträgt.

7. Akkuladegerät nach Anspruch 6, **dadurch gekennzeichnet, dass** der zweite Kontakt (18b) zwischen dem ersten Kontakt (16b) und dem dritten Kontakt (30b) angeordnet ist.

8. Akkuladegerät nach Anspruch 1, **dadurch gekennzeichnet, dass** das Akkuaufnahmegehäuse (82b) eine Öffnung aufweist, durch die das durch die Wasserablaufschlitze (32b) abgelaufene Wasser und/oder Schmutz austritt.

9. Akkuladegerät nach einem der vorhergehenden Ansprüche, **dadurch gekennzeichnet, dass** das Wasserfilmtrennmittel (20b) eine Trennwand bildet.

10. System mit einem Akkuladegerät (36b) nach einem der vorhergehenden Ansprüche und mit einem Akku (34a), der eine Akkuvorrichtung (10a) mit einer Dichtvorrichtung (12a) aufweist, wobei die Akkuvorrichtung (10a) zumindest einen Elektrikbereich (14a) wenigstens staubdicht und/oder wasserdicht verschließt, mit einem ersten elektrischen Kontakt (16a) und zumindest einem zweiten elektrischen Kontakt (18a), die dazu vorgesehen sind, eine elektrische Betriebsenergie und/oder Informationen zu übertragen, mit zumindest einem Wasserfilmtrennmittel (20a), das dazu vorgesehen ist, eine Bildung eines direkten Wasserfilms zwischen dem ersten Kontakt (16a) und dem zweiten Kontakt (18a) in zumindest einem Betriebszustand zu verhindern, **dadurch gekennzeichnet, dass** die Wasserfilmtrennmittel (20a) als von einem Gehäuseteil (26a) des Akkus (34a) begrenzte, räumlich zwischen Kontaktschlitzen (70a) der Kontakte (16a, 18a) angeordnete Wasserablaufschlitze (32) ausgebildet sind.

11. System nach Anspruch 10, **dadurch gekennzeichnet, dass** ein Abstand (114a), der zwei Wasserablaufschlitze (32a) des Akkus (34a) begrenzt, sowie ein Abstand (114b), der zwei Wasserablaufschlitze (32b) des Ladegeräts (36b) begrenzt, zumindest in einem Bereich der Wasserablaufschlitze (32a, 32b) gleich ist, sodass durch die Wasserablaufschlitze (32a, 32b) Wasser in das Akkuladegerät (36b) abfließt.

## Claims

1. Battery charger having a battery holding housing (82b) and a battery device (10b) with a sealing device (12b) which is intended to close at least an electrics region (14b) at least in a dust-tight and/or water-tight manner, comprising a first electrical contact (16b) and at least a second electrical contact (18b) which are intended to transmit electrical operating energy and/or information, and comprising at least one water film separating means (20b) which is intended to prevent formation of a direct water film between the first contact (16b) and the at least one second contact (18b) in at least one operating state, **characterized in that** the water film separating means (20b) each delimit a drainage slot (32b) in such a way that water can drain out of a region between the contacts (16b, 18b) into the battery holding housing (82b).

2. Battery charger according to Claim 1, **characterized by** a housing part (26b) which at least partially forms the water film separating means (20b).

3. Battery charger according to either of the preceding claims, **characterized in that** the housing part (26b) is connected to, in particular formed in one piece with, the battery holding housing (82b).

4. Battery charger according to one of the preceding claims, **characterized in that** the water film separating means (20b) is at least partially formed from a hydrophobic material.

5. Battery charger according to one of the preceding claims, **characterized in that** the water film separating means (20b) is arranged between the first contact (16b), which transmits the operating energy during operation, and the second contact (18b), which transmits information in at least one operating state.

6. Battery charger according to Claim 5, **characterized by** at least a third contact (30b), which transmits the electrical operating energy during operation.

7. Battery charger according to Claim 6, **characterized in that** the second contact (18b) is arranged between the first contact (16b) and the third contact (30b).

8. Battery charger according to Claim 1, **characterized in that** the battery holding housing (82b) has an opening through which the water and/or dirt drained through the drainage slots (32b) exits.

9. Battery charger according to one of the preceding claims, **characterized in that** the water film separating means (20b) forms a separating wall.

10. System comprising a battery charger (36b) according to one of the preceding claims and comprising a battery (34a) which has a battery device (10a) with a sealing device (12a), wherein the battery device (10a) closes at least an electrics region (14b) at least in a dust-tight and/or water-tight manner, comprising a first electrical contact (16a) and at least a second electrical contact (18a) which are intended to transmit electrical operating energy and/or information, comprising at least one water film separating means (20a) which is intended to prevent formation of a direct water film between the first contact (16a) and the second contact (18a) in at least one operating state, **characterized in that** the water film separating means (20a) are designed as water drainage slots (32) delimited by a housing part (26a) of the battery (34a) and arranged spatially between contact slots (70a) of the contacts (16a, 18a).

11. System according to Claim 10, **characterized in that** a distance (114a), which delimits two drainage slots (32a) of the battery (34a), and a distance (114b), which delimits two drainage slots (32b) of the charger (36b), are identical at least in a region of the drainage slots (32a, 32b), so that water runs off into the battery charger (36b) through the drainage slots (32a, 32b).

## Revendications

1. Chargeur de batterie comportant un boîtier de réception de batterie (82b) et un dispositif de batterie (10b) pourvu d'un dispositif d'étanchéité (12b) qui est prévu pour fermer au moins une zone électrique (14b) au moins de manière étanche à la poussière et/ou à l'eau, ledit chargeur de batterie comprenant un premier contact électrique (16b) et au moins un deuxième contact électrique (18b) qui sont prévues pour transmettre de l'énergie électrique de fonctionnement et/ou des informations, et au moins un moyen de séparation du film d'eau (20b) qui est prévu pour empêcher la formation d'un film d'eau direct entre le premier contact (16b) et l'au moins un deuxième contact (18b) dans au moins un état de fonctionnement, **caractérisé en ce que** les moyens de séparation de film d'eau (20b) délimitent chacun une fente d'évacuation d'eau (32b) de manière à ce que l'eau puisse s'écouler d'une zone située entre les contacts (16b, 18b) jusque dans le boîtier de réception de batterie (82b).

2. Chargeur de batterie selon la revendication 1, **caractérisé par** une partie de boîtier (26b) qui forme au moins partiellement le moyen de séparation de film d'eau (20b).

3. Chargeur de batterie selon l'une des revendications précédentes, **caractérisé en ce que** la partie de boîtier (26b) est reliée au boîtier de réception de batterie (82b), notamment est conçue d'une seule pièce avec celui-ci.

4. Chargeur de batterie selon l'une des revendications précédentes, **caractérisé en ce que** le moyen de séparation de film d'eau (20b) est formé au moins partiellement par un matériau hydrophobe.

5. Chargeur de batterie selon l'une des revendications précédentes, **caractérisé en ce que** le moyen de séparation de film d'eau (20b) est disposé entre le premier contact (16b), qui transmet l'énergie électrique de fonctionnement pendant le fonctionnement, et le deuxième contact (18b), qui transmet des informations dans au moins un état de fonctionnement.

6. Chargeur de batterie selon la revendication 5, **caractérisé par** au moins un troisième contact (30b) qui transmet l'énergie électrique de fonctionnement pendant le fonctionnement.

7. Chargeur de batterie selon la revendication 6, **caractérisé en ce que** le deuxième contact (18b) est disposé entre le premier contact (16b) et le troisième contact (30b).

8. Chargeur de batterie selon la revendication 1, **caractérisé en ce que** le boîtier de réception de batterie (82b) comporte une ouverture par laquelle sort l'eau et/ou la saleté qui ont été évacuées par les fentes d'évacuation d'eau (32b).

9. Chargeur de batterie selon l'une des revendications précédentes, **caractérisé en ce que** le moyen de séparation de film d'eau (20b) forme une paroi de séparation.

10. Système comprenant un chargeur de batterie (36b) selon l'une des revendications précédentes et une batterie (34a) qui comporte un dispositif de batterie (10a) pourvu d'un dispositif d'étanchéité (12a), le dispositif de batterie (10a) fermant au moins une zone électrique (14a) au moins de manière étanche à la poussière et/ou à l'eau, un premier contact électrique (16a) et au moins un deuxième contact électrique (18a), qui sont prévus pour transmettre l'énergie électrique de fonctionnement et/ou les informations, au moins un moyen de séparation de film d'eau (20a) qui est prévu pour empêcher la formation d'un film d'eau direct entre le premier contact (16a) et le deuxième contact (18a) dans au moins un état de fonctionnement, **caractérisé en ce que** les moyens de séparation de film d'eau (20a) sont conçus comme des fentes d'évacuation d'eau (32) qui sont délimitées par une partie de boîtier (26a) de la batterie (34a) et qui sont disposées spatialement entre des fentes de contact (70a) des contacts (16a, 18a) .

11. Système selon la revendication 10, **caractérisé en ce qu'**une distance (114a) qui délimite les deux fentes d'évacuation d'eau (32a) de la batterie (34a) et une distance (114b) qui délimite les deux fentes d'évacuation d'eau (32b) du chargeur (36b), sont égales au moins dans une zone des fentes d'évacuation d'eau (32a, 32b) de sorte que l'eau s'écoule jusque dans le chargeur de batterie (36b) par les fentes d'évacuation d'eau (32a, 32b).
